# EUROPEAN PATENT APPLICATION

(11) **EP 3 782 761 A1**
(43) Date of publication of application: **24.02.2021**
(21) Application number: 18915572.4
(22) Date of filing: 19.04.2018
(51) Int. Cl.: B23K 11/34, B23K 11/30, B23K 11/36

(54) **TIP DRESSER**

(71) Applicant: Kyokutoh Co., Ltd., Orido-cho, Nissin-shi Aichi 4700115 (JP)
(72) Inventor: HEEJOON, Kim, Nissin-shi, Aichi 470-0115 (JP)
(74) Representative: BRP Renaud & Partner mbB Rechtsanwälte Patentanwälte Steuerberater
(86) International application number: PCT/JP2018/016181
(87) International publication number: WO 2019/202710

(57) **Abstract**

A suction unit (8) for applying suction for chips (M1) is mounted to an underside of a main body housing (2). The suction unit (8) includes a cylindrical member (81) for generating an airflow (X1) inside along a cylinder center line (C2) of the cylindrical member (81), and a chip guiding member (82) having a chip suction port (82a) on a location closer to a lower communication hole (20b) of the main body housing (2) and connected to an upstream side opening of the cylindrical member (81). The cylindrical member (81) is connected to the chip guiding member (82) with the cylinder center line (C2) thereof extending downward away from a rotation axis (C1) of a rotary holder (4).

## Description

### TECHNICAL FIELD

The present disclosure relates to a tip dresser for cutting distal ends of electrode tips of spot welding.

### BACKGROUND ART

In conventional automobile production lines, spot welding is extensively used in assembling a vehicle body. In spot welding, an oxide layer builds up on an electrode tip distal end upon repeated welding operations and the welding performed in that condition causes deteriorated quality of a welded portion. For this reason, it is essential that the oxide layer is removed by periodically cutting the electrode tip distal end by using a tip dresser.

When chips created on cutting an electrode tip using a tip dresser scatter and stick to the drive unit, etc., of another apparatus, the chips increase the load on the drive unit, and in a most unwanted case, may cause a breakdown of the apparatus. Such chips are generally prevented from scattering around by exquisitely devising.

For example, Patent Document 1 discloses a tip dresser including a housing that has a hollow part therein, the housing including upper and lower communication holes formed to oppose one another vertically and communicate with the hollow part. In the hollow part and between the upper and lower communication holes, a rotary holder is axially supported in the housing so as to be rotatable about a vertically extending rotation axis. While an upper curved recess that opens upward is formed on a location of the rotary holder facing the upper communication hole, a lower curved recess that opens downward is formed on a location of the rotary holder facing the lower communication hole. The rotary holder has a cutaway part that progressively expands circumferentially around the rotation axis in an outward direction from the rotation axis to open laterally and extend therethrough vertically. The cutaway part includes one inner side surface to which a plate shaped cutting plate having a pair of upper and lower cutting blades is attached. One of a pair of electrode tips opposing one another is inserted in the upper curved recess through the upper communication hole and the other is inserted in the other curved recess through the lower communication hole in the state that the rotary holder is being turned, thereby enabling the cutting plate to cut each distal end of the electrode tips.

A suction unit capable of applying suction for chips is mounted to the underside of the housing via a mounting bracket. The suction unit includes a cylindrical member that generates an airflow inside along a cylinder center line of the cylindrical member by introducing compressed air into the cylindrical member; and a chip guiding member that has a chip guiding passage therein. The chip guiding member has on one end thereof a chip suction port closer to the lower communication hole and is on the other end connected to an upstream side opening of the cylindrical member. The suction unit is made such that when chips produced at the cutaway part during a cutting operation fall downward through the lower communication hole, the chips are sucked from the chip suction port of the chip guiding member into the chip guiding member by means of the airflow having generated inside the cylindrical member. The chips having sucked from the chip suction port into the chip guiding member pass through the interiors of the chip guiding member and cylindrical member in that order to travel to a chip corrector. Thus, the chips produced during the cutting operation of the electrode tip are prevented from scattering around the device.

### CITATION LIST

### PATENT DOCUMENT

[Patent Document 1] Korean Patent No. 10-1696263

### SUMMARY OF INVENTION

### TECHNICAL PROBLEM

In the tip dresser as disclosed in Patent Document 1, the cylindrical member of the suction unit is arranged to have the cylinder center line extending vertically and the chip guiding member is formed to extend horizontally. When the airflow is generated inside the cylindrical member, air sucked in from the chip suction port of the chip guiding member advances horizontally and subsequently changes its orientation to a downward direction toward the interior of the cylindrical member for further advancement. Therefore, there is an issue of occurrence of airflow turbulence in an area where the air changes the orientation for advancement, which causes susceptibility to reduced suction performance.

The cylindrical member of the suction unit disposed to have the cylinder center line extending vertically, as in Patent Document 1, makes an outer wall of the cylindrical member closer to the rotation axis of the rotary holder. For example, when an electrode tip attached to a shank distal end of a larger welding gun is brought closer to the lower communication hole of the housing, the suction unit may contact with a part of the welding gun, indicating the structure with lower usability.

The present disclosure is made in view of the foregoing and an object of the present disclosure is to provide a tip dresser having improved suction performance and suitable for a wide range of applications that allows a larger available space under the device to adapt for use of a wide variety of welding guns.

### SOLUTION TO PROBLEM

The present disclosure is characterized by devising a mounting arrangement of a cylindrical member in a suction unit, to achieve the object.

Specifically, the present disclosure is directed to a tip dresser including a housing that has a hollow part therein and upper and lower communication holes that oppose one another and communicate with the hollow part; a rotary holder axially and rotatably supported in the hollow part and between the upper and lower communication holes of the housing, the rotary holder having a pair of curved recesses corresponding to respective ones of the upper and lower communication holes and a penetrating part extending through along a rotation axis; and a cutting member attached to an inner side surface of the penetrating part; in which one of a pair of opposing electrode tips for spot welding is inserted into one of the curved recesses through the upper communication hole and the other is inserted into the other one of the curved recesses through the lower communication hole in the state that the rotary holder is being turned, to thereby cut each distal end of the electrode tips by the cutting member. The following solutions are then applied.

According to a first aspect of the present disclosure, a suction unit is mounted to an underside of the housing and configured to apply suction for chips created in the penetrating part during a cutting operation and falling downward through the lower communication hole, the suction unit including a cylindrical member for generating an airflow inside along a cylinder center line of the cylindrical member by introducing compressed air into the cylindrical member; and a chip guiding member having a chip suction port formed on a location closer to the lower communication hole and configured to connect to an upstream side opening of the cylindrical member at a position away from the lower communication hole and downward of the chip suction port, and the cylindrical member is configured to connect to the chip guiding member with the cylinder center line of the cylindrical member extending downward at an angle apart from the lower communication hole.

According to a second aspect of the present disclosure which is an embodiment of the first aspect of the disclosure, the chip guiding member includes a bottom having an interference avoidance part that extends linearly downward at an angle from a peripheral edge portion of the chip suction port substantially along the cylinder center line of the cylindrical member.

According to a third aspect of the present disclosure which is an embodiment of the second aspect, the interference avoidance part includes an extension end attached to a lower end portion of a peripheral edge of the upstream side opening of the cylindrical member.

According to a forth aspect of the present disclosure which is an embodiment of any one of the first to third aspects, the housing includes a motor casing containing a drive motor for turning the rotary holder; and a holder casing extending laterally from a top of the motor casing and having the upper and lower communication holes in an extending part of the holder casing; wherein the cylindrical member is configured to connect to the chip guiding member with the cylinder center line of the cylindrical member extending along a direction intersecting with an extending direction of the holder casing.

According to a fifth aspect of the present disclosure which is an embodiment of any one of the first to fourth aspects, the chip guiding member is mounted to the housing via a plate shaped bracket, and the plate shaped bracket has a cutout portion opening to an edge of one end of the plate shaped bracket and is attached to the housing with the one end positioned on a chip guiding member side and another end covering an area of the lower communication hole away from the chip guiding member and with a backside area of the cutout portion positioned corresponding to the curved recesses of the rotary holder.

According to a sixth aspect of the present disclosure which is an embodiment of the fifth aspect, the chip suction port includes a first suction region opening upward and a second suction region continuous with the first suction region and opening laterally, and the chip guiding member is mounted to the housing to cover an area of an opening side of the cutout portion by the first suction region.

### ADVANTAGEOUS EFFECTS OF INVENTION

In the first aspect of the present disclosure, the cylindrical member is arranged to incline gradually away from the rotation axis of the rotary holder in a downward direction, enabling a larger space available under the lower communication hole of the housing. Thus, for example, even when a distal end of an electrode tip attached to a shank distal end of a larger welding gun are cut, the welding gun is assuredly prevented from contacting with the suction unit, allowing the device to be used regardless of types and size, etc., of the welding gun. When the airflow is generated inside the cylindrical member, the inclination of the cylindrical member provides a less variation of an advancing direction of air sucked from the chip suction port of the chip guiding member and passing through the interior of the chip guiding member to flow into the cylindrical member, as compared to the tip dresser as described in Patent Document 1. Accordingly, a continuous portion between the interiors of the chip guiding member and the cylindrical member is less prone to generation of turbulence of the airflow, and thus improved suction performance of the suction unit can be achieved. In addition, the cylindrical member can be brought closer to the lower communication hole while the larger space is provided under the lower communication hole of the housing. In that respect, improved suction performance of the suction unit also can be achieved.

In the second aspect of the present disclosure, a welding gun brought closer to the housing during a cutting operation is further prevented from contacting with the suction unit, allowing the device to adapt for use of a wide variety of welding guns. The chip guiding member including an inner bottom surface having an inclining and linearly extending shape is less susceptible to generation of turbulence of the airflow, as compared to a chip guiding member including an inner bottom surface with a curved shape as described in Patent Document 1, enabling improved suction efficiency.

In the third aspect of the present disclosure, the air flows smoothly from the interior of the chip guiding member to the interior the cylindrical member, and thus further improved suction performance of the suction unit can be achieved.

In the fourth aspect of the present disclosure, the extending part of the holder casing from the motor casing can be smaller in size, permitting the tip dresser to have a smaller shape.

In the fifth aspect of the present disclosure, only when the cutaway part reaches to the chip guiding member side of the suction unit during the rotation of the rotary holder, the chips accumulated in the cutaway part fall down from the lower communication hole. This allows the chips falling down from the lower communication hole to be easily sucked into the chip suction port, thus assuredly preventing the chips from scattering around the device.

In the sixth aspect of the present disclosure, on one hand, the chips falling down from an area of the cutaway part of the rotary holder away from the suction unit pass through the backside area of the cutout portion to be sucked from the second suction region of the chip suction port into the chip guiding passage, and on the other hand, the chips falling down from an area of the cutaway part closer to the suction unit pass through the area of the opening side of the cutout portion to be sucked from the first suction region of the chip suction port into the chip guiding passage. Thus, the chips falling down from the cutaway part can be entirely sucked into the chip guiding passage.

### BRIEF DESCRIPTION OF DRAWINGS

[FIG. 1] FIG. 1 is a perspective view illustrating a tip dresser according to embodiments of the present disclosure.
[FIG. 2] FIG. 2 is an enlarged, exploded perspective view illustrating a tip dresser according to embodiments of the present disclosure.
[FIG. 3] FIG. 3 is a cross-sectional view taken along the line III-III in FIG. 1.
[FIG. 4] FIG. 4 is a fragmentary view taken in the direction of the arrow IV in FIG. 3.
[FIG. 5] FIG. 5 is a view illustrating a state that a rotary holder rotates and a cutaway part then reaches to a suction unit side, following the state of FIG.4.

### DESCRIPTION OF EMBODIMENTS

Embodiments of the present disclosure now will be described in detail with reference to the drawings. It is noted that the following description of preferred embodiments is merely an example in nature.

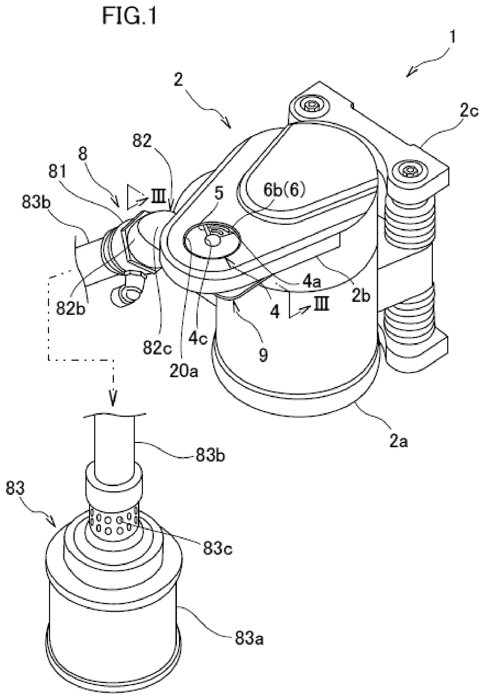

In FIGS. 1 to 3, a tip dresser 1 according to an embodiment of the present disclosure is illustrated. The tip dresser 1 is for simultaneously cutting curved distal ends 10a of a pair of electrode tips 10 used for spot welding and the electrode tips 10 are inserted onto respective distal ends of a shank G1 of a welding gun (not shown) to oppose one another. The tip dresser 1 includes a main body housing 2 (housing) having a hollow part 20 therein and being generally L-shaped in side view.

The main body housing 2 includes a bottomed cylindrical motor casing 2a containing a drive motor (not shown), and a holder casing 2b extending laterally in a substantially horizontal direction from a top of the motor casing 2a and being generally in the shape of a tear drop in planar view. A shock absorbing mechanism 2c for absorbing impact applied on the main body housing 2 is mounted on a side of the motor casing 2a and at a base end side of the holder casing 2b.

The holder casing 2b has a plate shape having a substantial thickness. Upper and lower communication holes 20a, 20b opposing one another vertically and communicating with the hollow part 20 are formed in a center of an extending part of the holder casing 2b.

In an interior of the holder casing 2b and between the upper and lower communication holes 20a, 20b, a ring-shaped output gear 3 is axially supported in the holder casing 2b so as to be rotatable about a vertically extending rotation axis C1 via a pair of upper and lower bearings 7. The drive motor housed in the motor casing 2a turns the output gear 3 via a gear meshing mechanism (not shown).

The output gear 3 has a mounting hole 3a extending therethrough vertically. A disk shaped rotary holder 4 is mounted in the mounting hole 3a.

The rotary holder 4 is generally C-shaped in planar view, and includes a cutaway part 4a (penetrating part) shaped to expand circumferentially around the rotation axis as progressing in a radially outward direction from the rotation axis.

The cutaway part 4a thus extends through along the rotation axis C1.

A flange 4b extending outwardly beyond other portions is formed on an upper peripheral edge of the rotary holder 4.

Further, a pair of curved recesses 4c shaped to have a gradual decrease in diameter toward a center part of the rotary holder 4 are formed on respective top and bottom surfaces of the rotary holder 4 and placed symmetrically along a direction of the rotation axis C1. Each of the curved recesses 4c corresponds to associate one of the upper and lower communication holes 20a, 20b.

The curved recess 4c has a shape corresponding to a curved shape of the distal end 10a of the electrode tip 10. The distal end 10a of the electrode tip 10 is inserted into the curved recess 4c with a central axis of the electrode tip 10 coinciding with the rotation axis C1.

A cutter 5 (cutting member) for cutting the distal end 10a of the electrode tip 10 is attached to one inner side surface of the cutaway part 4a extending outwardly from the rotation axis C1.

The cutter 5 includes a pair of cutting blades 5a extending along a direction intersecting with the rotation axis C1 and formed symmetrically along the direction of the rotation axis C1. The cutting blades 5a have a gently curved shape to correspond to the respective curved recesses 4c.

A generally ring shaped chip scattering prevention cover 6 is detachably attached to an outer peripheral edge portion of the flange 4b of the rotary holder 4.

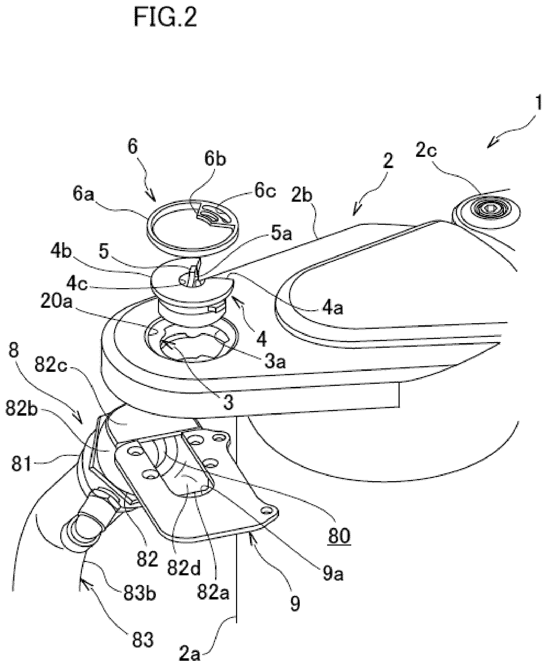

As illustrated in FIG.2, the chip scattering prevention cover 6 includes an annular portion 6a fitted externally around the outer peripheral edge portion of the flange 4b of the rotary holder 4, and a plate portion 6b being sector shaped in planar view and extending inwardly from an inner peripheral edge portion of the annular portion 6a. In the plate portion 6b, two elongated holes 6c having a curved shape and extending through in a plate thickness direction are arranged in parallel along a radial direction of the annular portion 6a.

When the annular portion 6a is fitted around the flange 4b of the rotary holder 4, the cutaway part 4a of a flange 4b side of the rotary holder 4 is covered by the plate portion 6b.

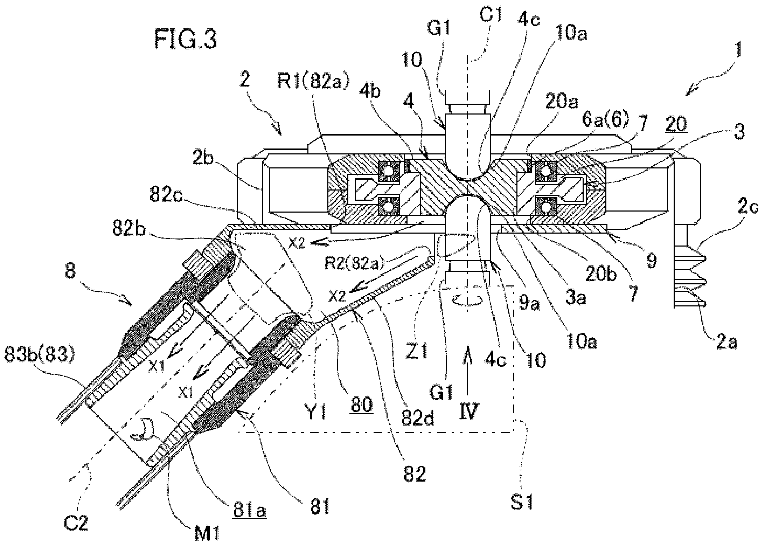

As illustrated in FIG.3, when one of the pair of the electrode tips 10 opposing one another is inserted in an upper curved recess 4c through the upper communication hole 20a and the other is inserted in a lower curved recess 4c through the lower communication hole 20b in the state that the rotary holder 4 is being turned, the distal ends 10a of the electrode tips 10 are each cut by the respective cutting blades 5a of the cutter 5.

A suction unit 8 for applying suction for chips M1 is mounted to an underside of the holder casing 2b of the main body housing 2 via a mounting bracket 9.

The suction unit 8 includes a cylindrical member 81 being generally cylindrical shaped and having an air passage 81a inside along a cylinder center line C2, a chip guiding member 82 disposed upstream of the cylindrical member 81 and having therein a chip guiding passage 80 configured to guide the chips M1, and a chip collector 83 disposed downstream of the cylindrical member 81 and capable of collecting the chips M1.

The cylindrical member 81 has the cylinder center line C2 oriented in a direction intersecting with an extending direction of the holder casing 2b and extending downward to angle apart from the rotation axis C1.

The cylindrical member 81 is formed such that when compressed air is introduced into the cylindrical member 81, the compressed air is discharged downstream of the air passage 81a to deliver negative pressure upstream of the air passage 81a, generating in the air passage 81a an airflow X1 oriented downward at an angle and along the cylinder center line C2.

The chip guiding member 82 is shaped to extend progressively away from a position closer to the lower communication hole 20b and has a chip suction port 82a formed on a location closer to the lower communication hole 20b. The chip guiding member 82 is connected to an upstream side opening of the cylindrical member 81 at a position spaced from the lower communication hole 20b and located below the chip suction port 82a.

The chip guiding member 82 includes a pair of side wall portions 82b having a generally triangular shape in front view and facing each other along the extending direction of the holder casing 2b, an upper wall portion 82c extending horizontally, being a generally semicircle shaped plate in planar view, and covering generally half an upper part between the side wall portions 82b on a further side away from the lower communication hole 20b, and a lower wall portion 82d (interference avoidance part) covering an lower part between the side wall portions 82b. The chip guiding passage 80 is formed in a part surrounded by both of the side wall portions 82b, the upper wall portion 82c, and the lower wall portion 82d.

Thus, the chip guiding passage 80 is shaped to be progressively wider vertically in a direction away from the chip suction port 82a.

The lower wall portion 82d extends linearly downward at an angle from a peripheral edge of an opening of the chip suction port 82a substantially along the cylinder center line C2 of the cylindrical member 81. The lower wall portion 82d has an extension end that is attached to a lower end portion of a peripheral edge of the upstream side opening of the cylindrical member 81.

The chip suction port 82a is formed of generally half the upper part between the side wall portions 82b on a closer side to the lower communication hole 20b. The chip suction port 82a includes a first suction region R1 that opens upward, and a second suction region R2 that is formed of a part surrounded by the side wall portions 82b and an edge of a lower communication hole 20b side of the lower wall portion 82d, is continuous with the first suction region R1, and opens laterally.

The chip collector 83 includes a generally cylindrical storing box 83a capable of storing the chips M1 inside the storing box 83a, and a connecting tube 83b connecting the storing box 83a and a downstream side opening of the cylindrical member 81 to have the air passage 81a in communication with an interior of the storing box 83a. A plurality of vent holes 83c for venting air located inside the connecting tube 83b into an outside are formed in a wall of a storing box 83a side of the connecting tube 83b.

The mounting bracket 9 is a plate member extending horizontally and being generally U-shaped in planar view. The mounting bracket 9 has a cutout portion 9a that opens to an edge of one end of the mounting bracket 9.

The mounting bracket 9 is attached to the holder casing 2b to have the one end positioned on a chip guiding member 82 side and another end covering an area of the lower communication hole 20b away from the chip guiding member 82 and to have a backside area of the cutout portion 9a positioned corresponding to the lower curved recess 4c of the rotary holder 4.

The mounting bracket 9 allows the chip guiding member 82 to be mounted to the holder casing 2b such that the first suction region R1 of the chip guiding member 82 covers an area of an opening side of the cutout portion 9a.

When the distal end 10a of the electrode tip 10 is cut by the cutter 5 with the airflow X1 being generated in the cylindrical member 81, the chips M1 created in the cutaway part 4a of the rotary holder 4 during the cutting operation of the electrode tips 10 by the cutter 5 and falling downward through the lower communication hole 20b, are sucked from the chip suction port 82a into the chip guiding passage 80 to be ejected into the chip collector 83 through the air passage 81a.

Next, a cutting operation for distal ends 10a of electrode tips 10 performed by the tip dresser 1 is described in detail.

First, as illustrated in FIG.3, the output gear 3 is rotated by turning the drive motor (not shown) of the tip dresser 1, to thereby rotate the rotary holder 4 about the rotation axis C1.

The airflow X1 is also generated in the air passage 81a of the cylindrical member 81 by delivering compressed air into the cylindrical member 81 of the suction unit 8 by means of an air compressor (not shown).

A discharge nozzle (not shown) positioned above the holder casing 2b further discharges compressed air toward a surface area of a suction unit 8 side of the rotary holder 4.

Then, the pair of the electrode tips 10 opposing vertically are moved above and below the holder casing 2b respectively to have the central axis of each of the electrode tips 10 coinciding with the rotation axis C1 of the rotary holder 4.

Subsequently, the electrode tips 10 are brought closer to one another. While upper one of the electrode tips 10 is inserted in the upper curved recess 4c of the rotary holder 4 through the upper communication hole 20a of the holder casing 2b, lower one of the electrode tips 10 is inserted in the lower curved recess 4c of the rotary holder 4 through the lower communication hole 20b of the holder casing 2b. The distal ends 10a of the electrode tips 10 are then cut by the cutter 5 attached to the rotary holder 4.

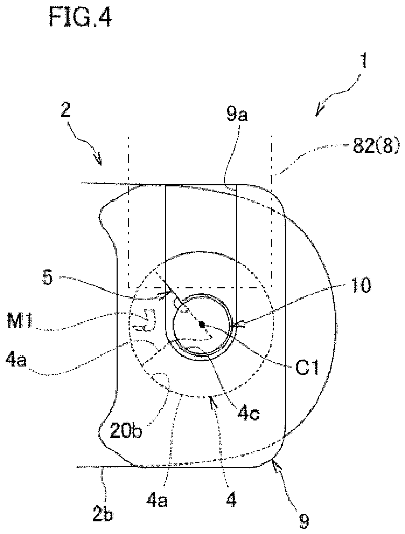

In doing so, as illustrated in FIG.4, the chips M1 created from the distal ends 10a of the electrode tips 10 accumulate in the cutaway part 4a of the rotary holder 4, when the cutaway part 4a of the rotary holder 4 is not positioned at the suction unit 8 side.

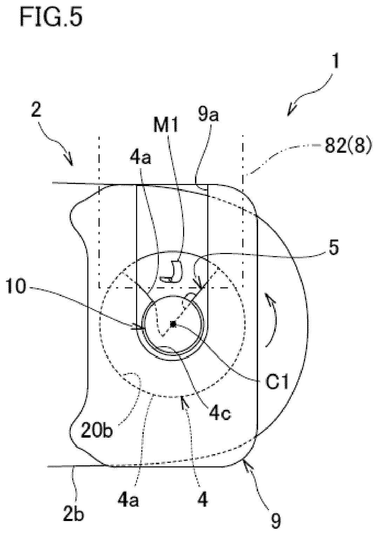

In turn, as illustrated in FIG.5, when the rotary holder 4 rotates and the cutaway part 4a of the rotary holder 4 reaches to the suction unit 8 side, the compressed air discharged from the discharge nozzle (not shown) positioned above the holder casing 2b enters the cutaway part 4a through the elongated holes 6c of the plate portion 6b of the chip scattering prevention cover 6, enabling the chips M1 accumulating in the cutaway part 4a to fall downward.

In spite of the fact that the chips falling down from the cutaway part 4a are expected to fall downward through the lower communication hole 20b, the airflow X1 having generated in the air passage 81a of the cylindrical member 81 causes air to flow from the chip suction port 82a into the chip guiding passage 80, which is shown as an airflow X2 in FIG.3. As illustrated in FIG. 3, the airflow X2 generates a high-speed airflow (commonly called air shield) toward the chip suction port 82a in an area Z1 located under the lower communication hole 20b and thereby the chips M1 are sucked into the chip guiding passage 80 through the chip suction port 82a. More specifically, on one hand, the chips M1 falling down from an area of the cutaway part 4a of the rotary holder 4 away from the suction unit 8 pass through the backside area of the cutout portion 9a of the mounting bracket 9 to be sucked from the second suction region R2 of the chip suction port 82a into the chip guiding passage 80, and on the other hand, the chips falling down from an area of the cutaway part 4a closer to the suction unit 8 pass through the area of the opening side of the cutout portion 9a to be sucked from the first suction region R1 of the chip suction port 82a into the chip guiding passage 80. Thus, the chips M1 falling down from the cutaway part 4a can be entirely sucked into the chip guiding passage 80.

The mounting bracket 9 covers the area of the lower communication hole 20b away from the suction unit 8. In this way, only when the rotary holder 4 rotates and the cutaway part 4a reaches to the chip guiding member 82 side, the chips M1 accumulating in the cutaway part 4a fall downward from the lower communication hole 20b. This enables the chips M1 falling down from the lower communication hole 20b to be easily sucked from the chip suction port 82a, thus assuredly preventing the chips from scattering around the device.

The chips M1 having entered from the chip suction port 82a into the chip guiding passage 80 move mostly along both of the side wall portions 82b and the lower wall portion 82d toward the air passage 81a of the cylindrical member 81 by means the airflow X2. In doing so, the cylindrical member 81 is connected to the chip guiding member 82 and inclined so as to have the cylinder center line C2 of the cylindrical member 81 extending downward at an angle, thus lowering a variation of an advancing direction of the air (a variation of an advancing direction of the air in an area Y1 in FIG.3) that flows into the air passage 81a of the cylindrical member 81 through the chip guiding passage 80, as compared to a tip dresser as described in Patent Document 1. Accordingly, a continuous portion between the chip guiding passage 80 and the air passage 81a is less prone to generation of turbulence of the airflow, enabling improved suction performance of the suction unit 8.

The lower wall portion 82d extends linearly downward at an angle from the peripheral edge of the chip suction port 82a substantially along the cylinder center line C2 of the cylindrical member 81, and thus generation of turbulence of the airflow is less likely to occur, as compared to a configuration of having a bottom surface with a curved shape inside a chip guiding member 82 as described in Patent Document 1. This enables improved suction efficiency.

The lower wall portion 82d includes the extension end attached to the lower end portion of the peripheral edge of the upstream side opening of the cylindrical member 81, so that the air flows smoothly from the chip guiding passage 80 into the air passage 81a of the cylindrical member 81. Thus, further improved suction performance of the suction unit 8 can be achieved.

The chips M1 having reached the air passage 81a of the cylindrical member 81 subsequently pass through the air passage 81a and an interior of the connecting tube 83b along the airflow X1 to be stored in the storing box 83a.

Accordingly, the present disclosure provides the tip dresser 1 including the suction unit 8 having higher suction performance.

The cylindrical member 81 is then arranged to incline gradually away from the rotation axis C1 of the rotary holder 4 in a downward direction, thus enabling a larger space S1 available under the lower communication hole 20b of the holder casing 2b (see FIG.3). In this way, for example, even when the distal end 10a of the electrode tip 10 attached to a shank distal end of a larger welding gun is cut, the welding gun is assuredly prevented from contacting with the suction unit 8, allowing the tip dresser 1 to be used regardless of types and size, etc., of the welding gun.

Further, the inclination of the cylindrical member 81 allows the cylindrical member 81 to be brought closer to the lower communication hole 20b while the larger space S1 is provided under the lower communication hole 20b of the holder casing 2b. In that respect, improved suction performance of the suction unit 8 also can be achieved.

In addition, the lower wall portion 82d of the chip guiding member 82 extends linearly downward at an angle substantially along the cylinder center line C2 of the cylindrical member 81 and thus the welding gun brought closer to the holder casing 2b is further prevented from contacting with the suction unit 8. This enables the tip dresser 1 to adapt for use of a wide variety of welding guns.

The cylindrical member 81 is also connected to the chip guiding member 82 with the cylinder center line C2 of the cylindrical member 81 extending along the direction intersecting with the extending direction of the holder casing 2b. This enables the extending part of the holder casing 2b from the motor casing 2a to be smaller in size. Accordingly, the tip dresser 1 is able to have a smaller shape.

### INDUSTRIAL APPLICABILITY

The present disclosure is suitable for a tip dresser for cutting distal ends of electrode tips of spot welding.

### DESCRIPTION OF REFERENCE CHARACTERS

- 1:: Tip Dresser
- 2:: Main Body Housing (Housing)
- 2a:: Motor Casing
- 2b:: Holder Casing
- 4:: Rotary Holder
- 4a:: Cutaway Part (Penetrating part)
- 4c:: Curved Recess
- 5:: Cutter (Cutting Member)
- 8:: Suction Unit
- 9:: Plate Shaped Bracket
- 9a:: Cutout Portion
- 10:: Electrode Tip
- 11a:: Distal End
- 20:: Hollow part
- 81:: Cylindrical Member
- 82:: Chip Guiding Member
- 82a:: Chip Suction Port
- 82d:: Lower Wall Portion (Interference Avoidance Part)
- C1:: Rotation Axis
- C2:: Cylinder Center Line
- M1:: Chips
- R1:: First Suction Region
- R2:: Second Suction Region
- X1:: Airflow

## Claims

1. A tip dresser including a housing that has a hollow part therein and upper and lower communication holes that oppose one another and communicate with the hollow part; a rotary holder axially and rotatably supported in the hollow part and between the upper and lower communication holes of the housing, the rotary holder having a pair of curved recesses corresponding to respective ones of the upper and lower communication holes and a penetrating part extending through along a rotation axis; and a cutting member attached to an inner side surface of the penetrating part; in which one of a pair of opposing electrode tips for spot welding is inserted into one of the curved recesses through the upper communication hole and the other is inserted into the other one of the curved recesses through the lower communication hole in the state that the rotary holder is being turned, to thereby cut each distal end of the electrode tips by the cutting member, wherein
a suction unit is mounted to an underside of the housing, and configured to apply suction for chips created in the penetrating part during a cutting operation and falling downward through the lower communication hole,
the suction unit includes a cylindrical member for generating an airflow inside along a cylinder center line of the cylindrical member by introducing compressed air into the cylindrical member; and a chip guiding member having a chip suction port formed on a location closer to the lower communication hole and configured to connect to an upstream side opening of the cylindrical member at a position away from the lower communication hole and downward of the chip suction port, and
the cylindrical member is configured to connect to the chip guiding member with the cylinder center line of the cylindrical member extending downward at an angle apart from the lower communication hole.

2. The tip dresser according to claim 1, wherein
the chip guiding member includes a bottom having an interference avoidance part that extends linearly downward at an angle from a peripheral edge portion of the chip suction port substantially along the cylinder center line of the cylindrical member.

3. The tip dresser according to claim 2, wherein
the interference avoidance part includes an extension end attached to a lower end portion of a peripheral edge of the upstream side opening of the cylindrical member.

4. The tip dresser according to any one of claims 1 to 3, wherein
the housing includes a motor casing containing a drive motor for turning the rotary holder; and a holder casing extending laterally from a top of the motor casing and having the upper and lower communication holes in an extending part of the holder casing, and
the cylindrical member is configured to connect to the chip guiding member with the cylinder center line of the cylindrical member extending along a direction intersecting with an extending direction of the holder casing.

5. The tip dresser according to any one of claims 1 to 4, wherein
the chip guiding member is mounted to the housing via a plate shaped bracket, and
the plate shaped bracket has a cutout portion opening to an edge of one end of the plate shaped bracket, and is attached to the housing with the one end positioned on a chip guiding member side and another end covering an area of the lower communication hole away from the chip guiding member and with a backside area of the cutout portion positioned corresponding to the curved recesses of the rotary holder.

6. The tip dresser according to claim 5, wherein
the chip suction port includes a first suction region opening upward and a second suction region continuous with the first suction region and opening laterally, and
the chip guiding member is mounted to the housing to cover an area of an opening side of the cutout portion by the first suction region.
